# EUROPÄISCHE PATENTANMELDUNG

(11) **EP 3 012 532 A1**
(43) Veröffentlichungstag der Anmeldung: **27.04.2016**
(21) Anmeldenummer: 15186488.1
(22) Anmeldetag: 23.09.2015
(51) Int. Cl.: F24C 7/08, D06F 33/02, G05B 19/04, G06F 3/033

(54) **VERFAHREN UND VORRICHTUNG ZUM BEDIENEN EINES HAUSHALTSGERÄTS SOWIE HAUSHALTSGERÄT**

(30) Priorität: 23.10.2014 DE 102014115460
(71) Anmelder: Miele & Cie. KG, 33332 Gütersloh (DE)
(72) Erfinder: Megger, Andre, 49586 Neuenkirchen (DE); Eblenkamp, Alfons, 33397 Rietberg (DE)

(57) **Zusammenfassung**

Die Erfindung betrifft ein Verfahren zum Bedienen eines Haushaltsgeräts (100), das zumindest einen Sensor (102, 118) zum Erfassen eines Nutzers (108) des Haushaltsgeräts (100) aufweist. Dabei wird zunächst eine durch den Sensor (102, 118) erfasste Bewegung des Nutzers (108) ausgewertet. Wird dabei die Bewegung als eine in einem vorgegebenen ersten Erfassungsbereich (104) erfasste Annäherungsbewegung relativ zum Haushaltsgerät (100) erkannt, so wird ein Einschaltsignal bereitgestellt, um das Haushaltsgerät (100) in einen betriebsbereiten Zustand zu versetzen. Wird die Bewegung hingegen als eine in einem vorgegebenen zweiten Erfassungsbereich (106) erfasste Annäherungsbewegung relativ zum Haushaltsgerät (100) erkannt, so wird unter Verwendung des Einschaltsignals ein Aktivierungssignal zum Aktivieren einer Bedienbewegungserkennungsfunktion des Haushaltsgeräts (100) ausgegeben.

## Beschreibung

Die Erfindung betrifft ein Verfahren zum Bedienen eines Haushaltsgeräts, eine entsprechende Vorrichtung, ein Haushaltsgerät sowie ein entsprechendes Computerprogramm.

Aktuelle Haushaltsgeräte werden in der Regel berührbar mittels Schaltern, Tasten oder Touchscreens bedient.

Vor diesem Hintergrund werden mit dem hier vorgestellten Ansatz ein verbessertes Verfahren zum Bedienen eines Haushaltsgeräts, eine verbesserte Vorrichtung, die dieses Verfahren verwendet, ein entsprechendes Computerprogramm sowie schließlich ein verbessertes Haushaltsgerät gemäß den Hauptansprüchen vorgestellt. Vorteilhafte Ausgestaltungen ergeben sich aus den jeweiligen Unteransprüchen und der nachfolgenden Beschreibung.

Der hier vorgeschlagene Ansatz schafft ein Verfahren zum Bedienen eines Haushaltsgeräts, das zumindest einen Sensor zum Erfassen eines Nutzers des Haushaltsgeräts aufweist, wobei das Verfahren folgende Schritte umfasst:
Auswerten einer durch den Sensor erfassten Bewegung des Nutzers;
Bereitstellen eines Einschaltsignals zum Versetzen des Haushaltsgeräts in einen betriebsbereiten Zustand, wenn im Schritt des Auswertens die Bewegung als eine in einem vorgegebenen ersten Erfassungsbereich erfasste Annäherungsbewegung relativ zum Haushaltsgerät erkannt wird; und
Ausgeben eines Aktivierungssignals zum Aktivieren einer Bedienbewegungserkennungsfunktion des Haushaltsgeräts unter Verwendung des Einschaltsignals, wenn im Schritt des Auswertens die Bewegung als eine in einem vorgegebenen zweiten Erfassungsbereich erfasste Annäherungsbewegung relativ zum Haushaltsgerät erkannt wird.

Unter einem Haushaltsgerät kann beispielsweise ein Backofen, ein Dampfgarer, ein Kaffeevollautomat, eine Dunstabzugshaube, ein Kochfeld, ein Waschautomat, ein Wäschetrockner, ein Geschirrspüler oder ein Kühlgerät verstanden werden. Bei dem Sensor kann es sich um einen Sensor zur optischen Abstandsmessung, etwa mittels Infrarottriangulation, Laufzeitmessung oder Phasenlagenmessung, oder auch um einen kapazitiven Sensor, einen Ultraschallsensor oder einen Radarsensor handeln. Der Sensor kann zumindest zwei unterschiedliche Erfassungsbereiche zum Erfassen einer Bewegung des Nutzers aufweisen. Die Erfassungsbereiche können sich in ihrer Erfassungsrichtung, ihrer Reichweite und ihrem Öffnungswinkel voneinander unterscheiden. Je nach Ausführungsform kann beispielsweise im ersten Erfassungsbereich die Bewegung in einem Abstand von mehr als 1, 2 oder 5 m zum Haushaltsgerät und im zweiten Erfassungsbereich die Bewegung in einem Abstand von weniger als 1, 2 oder 5 m zum Haushaltsgerät erfasst werden. Unter einer Bewegung kann eine einzelne Bewegung oder ein Bewegungsablauf verstanden werden. Die Bewegung kann im Schritt des Auswertens fortlaufend ausgewertet werden, um eine Annäherung des Nutzers an das Haushaltsgerät innerhalb zumindest eines der beiden Erfassungsbereiche zu erkennen. Beispielsweise kann die Annäherungsbewegung auch dann erkannt werden, wenn sich nur ein Körperteil des Nutzers auf das Haushaltsgerät zubewegt. Anders ausgedrückt kann der Schritt des Auswertens fortlaufend wiederholt werden, um zeitlich aufeinanderfolgende Bewegungen des Nutzers auszuwerten.

Unter einem Einschaltsignal kann ein Signal verstanden werden, das dazu dient, das Haushaltsgerät in einen betriebsbereiten Zustand zu versetzen. Beispielsweise kann das Haushaltsgerät mittels des Einschaltsignals eingeschaltet oder von einem Ruhezustand, etwa einem Stromsparmodus, in den betriebsbereiten Zustand umgeschaltet werden.

Unter einem Aktivierungssignal kann ein Signal verstanden werden, das dazu dient, eine Bedienbewegungserkennungsfunktion des Haushaltsgeräts zu aktivieren. Insbesondere kann das Aktivierungssignal im Schritt des Ausgebens ausgegeben werden, sofern sich das Haushaltsgerät bereits im betriebsbereiten Zustand befindet. Ist dies nicht der Fall, so kann beispielsweise das Ausgeben des Aktivierungssignals unterdrückt werden, selbst wenn im Schritt des Auswertens die Annäherungsbewegung im zweiten Erfassungsbereich erkannt wird.

Unter einer Bedienbewegungserkennungsfunktion kann eine Betriebsart des Haushaltsgeräts verstanden werden, die das Haushaltsgerät in die Lage versetzt, berührungslose Bedienbewegungen des Nutzers zu erkennen. Unter einer Bedienbewegung kann beispielsweise eine bestimmte Hand-, Finger- oder Armbewegung zur Bedienung des Haushaltsgeräts, etwa eine Wisch-, Annäherungs- oder Entfernungsgeste, verstanden werden, die der Nutzer ausführt, ohne dabei das Haushaltsgerät zu berühren. Bei der Bedienbewegung kann es sich auch um eine unspezifische Annäherung eines Körperteils des Nutzers an das Haushaltsgerät handeln, etwa eines Kopfes oder einer Hand. Insbesondere kann die Bewegung des Nutzers mittels der Bedienbewegungserkennungsfunktion als Bedienbewegung erkannt werden, wenn die Bewegung im zweiten Erfassungsbereich erfasst wird.

Der hier vorgestellte Ansatz beruht auf der Erkenntnis, dass eine Annäherung einer Person an ein Haushaltsgerät sensorisch erkannt werden kann, um eine Bedienung des Haushaltsgeräts durch einfache Gesten wie beispielsweise Annäherungsgesten oder Wischgesten vor dem Haushaltsgerät zu ermöglichen.

Beispielsweise kann dabei eine Annäherungserkennung mit einer Anwesenheitserkennung kombiniert werden. Dadurch lässt sich das Haushaltsgerät intuitiv, einfach und komfortabel bedienen, ohne dass die Person erst nach geeigneten Tasten oder Schaltern suchen muss.

Vorteilhafterweise kann zur robusten Erkennung der Annäherung sowie einfacher Gesten ein ressourcensparendes, preiswertes Sensorsystem ohne komplexe Bildbearbeitung verwendet werden, wodurch auf teure Kamerasysteme verzichtet werden kann. Somit kann der hier vorgestellte Ansatz mit verhältnismäßig geringem technischem und wirtschaftlichem Aufwand realisiert werden.

Die Anwesenheitserkennung kann beispielsweise auch als Ergänzung einer Sprachsteuerung des Haushaltsgeräts eingesetzt werden, etwa indem die Sprachsteuerung nur dann aktiviert wird, wenn die Person erkannt wird.

Nicht zuletzt kann eine zusätzliche Bedienmöglichkeit durch einfache Gesten ein begeisterndes Bedienerlebnis schaffen.

Gemäß einer Ausführungsform kann der erste Erfassungsbereich weiter von dem Haushaltsgerät entfernt sein als der zweite Erfassungsbereich. Dadurch wird eine zweistufige Detektion der Bewegung des Nutzers in Abhängigkeit von einer Entfernung des Nutzers vom Haushaltsgerät ermöglicht. Beispielsweise kann in einer dem ersten Erfassungsbereich zugeordneten ersten Stufe eine Annäherung des Nutzers aus einer größeren Entfernung erkannt werden und in einer dem zweiten Erfassungsbereich zugeordneten zweiten Stufe eine Annäherung des Nutzers aus einer geringeren Entfernung detektiert werden.

Es ist ferner vorteilhaft, wenn im Schritt des Ausgebens das Aktivierungssignal ausgegeben wird, wenn im Schritt des Auswertens die Bewegung als eine in dem zweiten Erfassungsbereich erfasste Annäherungsbewegung eines Körperteils des Nutzers relativ zum Haushaltsgerät erkannt wird. Ein Körperteil kann beispielsweise ein Finger, eine Hand, ein Arm oder ein Kopf des Nutzers sein. Dadurch kann die Bewegung differenziert ausgewertet werden, etwa um Einzelbewegungen des Nutzers, insbesondere während einer Fortbewegung des Nutzers, zu erkennen.

Von Vorteil ist auch, wenn im Schritt des Bereitstellens das Einschaltsignal bereitgestellt wird und, zusätzlich oder alternativ, im Schritt des Ausgebens das Aktivierungssignal ausgegeben wird, wenn im Schritt des Auswertens die Bewegung als eine für eine vorgegebene Annäherungsdauer andauernde Annäherungsbewegung relativ zum Haushaltsgerät erkannt wird. Unter einer Annäherungsdauer kann eine Zeitspanne verstanden werden, die die Annäherungsbewegung mindestens dauern muss, um als Annäherungsbewegung erkannt werden zu können. Beispielsweise kann die Annäherungsdauer zwischen 0,8 s und 2 s liegen. Dadurch kann eine gezielte Annäherungsbewegung mit hoher Zuverlässigkeit von einer zufälligen Annäherungsbewegung unterschieden werden, etwa wenn der Nutzer schräg an dem Haushaltsgerät vorbeiläuft.

Das Verfahren kann mit einem Schritt des Erzeugens eines Änderungssignals zum Ändern einer Anzeige und, zusätzlich oder alternativ, einer Signaltonlautstärke des Haushaltsgeräts unter Verwendung entweder des Einschaltschaltsignals oder des Aktivierungssignals oder beider Signale vorgesehen sein. Unter einer Anzeige kann beispielsweise ein Bildschirm oder ein Leuchtfeld zum Anzeigen von Informationen über eine Betriebsart, einer Uhrzeit oder sonstiger Informationen, die für den Nutzer von Interesse sein können, verstanden werden. Unter einer Signaltonlautstärke kann eine Lautstärke verstanden werden, mit der das Haushaltsgerät Signaltöne wiedergibt, etwa wenn die Betriebsart geändert wird. Beispielsweise kann das Haushaltsgerät ausgebildet sein, um die Signaltonlautstärke in Abhängigkeit von einer Entfernung des Nutzers vom Haushaltsgerät zu steuern. Mithilfe des Änderungssignals kann beispielsweise erreicht werden, dass die Anzeige erst dann aktiviert wird, wenn sich der Nutzer in der Nähe des Haushaltsgeräts befindet. Dadurch kann der Stromverbrauch des Haushaltsgeräts reduziert werden.

Des Weiteren kann das Verfahren einen Schritt umfassen, in dem eine durch den Sensor erfasste weitere Bewegung des Nutzers mittels der Bedienbewegungserkennungsfunktion unter Verwendung des Aktivierungssignals analysiert wird. Dabei kann in einem Schritt des Generierens ein Steuersignal zum Steuern des Haushaltsgeräts generiert werden, wenn im Schritt des Analysierens die weitere Bewegung als eine Bedienbewegung zum berührungslosen Bedienen des Haushaltsgeräts erkannt wird. Die weitere Bewegung kann beispielsweise eine Bewegung sein, die einer im Schritt des Auswertens ausgewerteten Bewegung zeitlich nachfolgt. Beispielsweise können die Bewegung und die weitere Bewegung Teilbewegungen ein und desselben Bewegungsablaufs des Nutzers sein, der beispielsweise die in den beiden Erfassungsbereichen erfassten Annäherungsbewegungen und die Bedienbewegung umfassen kann. Dabei kann die Bedienbewegung, wie bereits erwähnt, wiederum eine Annäherungsbewegung des Nutzers, insbesondere eines Körperteils des Nutzers, oder auch eine explizite Geste sein. Durch eine derartige Kombination einer Anwesenheits- mit einer Bedienbewegungserkennung können Fehlbedienungen durch ungewollte Gesten vermieden werden.

Vorteilhafterweise kann im Schritt des Generierens das Steuersignal generiert werden, wenn im Schritt des Analysierens die weitere Bewegung als eine in dem zweiten Erfassungsbereich erfasste Bedienbewegung erkannt wird. Insbesondere kann es sich bei dem zweiten Erfassungsbereich um einen Nahbereich handeln, in dem Bewegungen in einem Abstand von beispielsweise weniger als 20 cm oder weniger als 50 cm zum Haushaltsgerät erfasst werden können. Indem die Bedienbewegung im zweiten Erfassungsbereich erkannt wird, kann verhindert werden, dass Bewegungen, die außerhalb des zweiten Erfassungsbereichs, aber innerhalb des ersten Erfassungsbereichs ausgeführt werden, fälschlicherweise als Bedienbewegungen erkannt werden.

Ferner kann im Schritt des Generierens das Steuersignal generiert werden, wenn im Schritt des Analysierens die weitere Bewegung als eine für eine vorgegebene Bediendauer andauernde Bedienbewegung erkannt wird. Unter einer Bediendauer kann eine Zeitspanne verstanden werden, die die Bedienbewegung mindestens dauern muss, um als Bedienbewegung erkannt werden zu können. Beispielsweise kann die Bediendauer zwischen 0,5 s und 2 s liegen. Auch durch diese Ausführungsform kann die Erkennungsleistung des Haushaltsgeräts verbessert werden.

Es kann im Schritt des Ausgebens unter Verwendung des Einschaltsignals zumindest ein weiteres Steuersignal zum Steuern des Haushaltsgeräts ausgegeben werden, wenn im Schritt des Auswertens die Bewegung als eine in zumindest einem vorgegebenen weiteren Erfassungsbereich erfasste Annäherungsbewegung relativ zum Haushaltsgerät erkannt wird. Dadurch kann die Bedienbarkeit des Haushaltsgeräts verbessert werden.

Gemäß einer weiteren Ausführungsform kann der weitere Erfassungsbereich in eine andere Richtung als der erste Erfassungsbereich, in eine andere Richtung als der zweite Erfassungsbereich oder in eine andere Richtung als der erste und der zweite Erfassungsbereich orientiert sein. Beispielsweise kann eine Erfassungsrichtung des weiteren Erfassungsbereichs um 10, 45 oder 90 Grad von einer jeweiligen Erfassungsrichtung des ersten oder des zweiten Erfassungsbereichs abweichen. Dadurch kann ein Gesamterfassungsbereich des Haushaltsgeräts deutlich vergrößert werden.

Ferner kann im Schritt des Auswertens zumindest eine durch den Sensor erfasste zusätzliche Bewegung des Nutzers ausgewertet werden. In einem Schritt des Aussendens kann zumindest ein zusätzliches Steuersignal zum Steuern des Haushaltsgeräts ausgesendet werden, wenn im Schritt des Auswertens die zusätzliche Bewegung als eine Entfernungsbewegung relativ zum Haushaltsgerät erkannt wird. Durch eine derart automatisierte Ansteuerung des Haushaltsgeräts kann die Anzahl der vom Nutzer manuell auszuführenden Bedienvorgänge reduziert werden und somit der Bedienkomfort erhöht werden.

Der hier vorgestellte Ansatz schafft ferner eine Vorrichtung, die ausgebildet ist, alle Schritte eines Verfahrens gemäß zumindest einer der vorstehend beschriebenen Ausführungsformen durchzuführen.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Weiterhin schafft der vorgeschlagene Ansatz ein Haushaltsgerät mit einer Vorrichtung gemäß einer vorangehend beschriebenen Ausführungsform und zumindest einem Sensor zum Erfassen eines Nutzers des Haushaltsgeräts.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ein Ausführungsbeispiel der Erfindung ist in den Zeichnungen rein schematisch dargestellt und wird nachfolgend näher beschrieben. Es zeigt
- Figur 1: eine schematische Darstellung eines Haushaltsgeräts gemäß einem Ausführungsbeispiel der vorliegenden Erfindung;
- Figur 2: eine schematische Darstellung einer Bedienblende eines Haushaltsgeräts gemäß einem Ausführungsbeispiel der vorliegenden Erfindung;
- Figur 3: ein Blockschaltbild eines Sensorsystems zur Nutzererfassung gemäß einem Ausführungsbeispiel der vorliegenden Erfindung;
- Figur 4: ein Ablaufdiagramm eines Algorithmus zur Auswertung von Sensorsignalen durch eine Vorrichtung gemäß einem Ausführungsbeispiel der vorliegenden Erfindung;
- Figur 5: ein Ablaufdiagramm eines Verfahrens zum Bedienen eines Haushaltsgeräts gemäß einem Ausführungsbeispiel der vorliegenden Erfindung; und
- Figur 6: ein Blockschaltbild einer Vorrichtung zum Bedienen eines Haushaltsgeräts gemäß einem Ausführungsbeispiel der vorliegenden Erfindung.

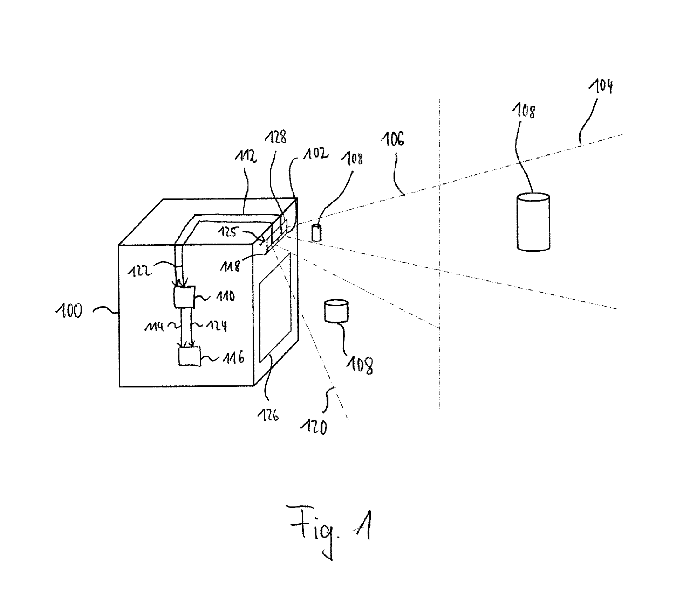

Figur 1 zeigt eine schematische Darstellung eines Haushaltsgeräts 100 gemäß einem Ausführungsbeispiel der vorliegenden Erfindung. Das Haushaltsgerät 100 umfasst einen Sensor 102, der beispielhaft in eine Gerätefront des Haushaltsgeräts 100 eingebaut ist. Gemäß diesem Ausführungsbeispiel weist der Sensor 102 einen in einen Fernbereich 104 und einen Nahbereich 106 unterteilten Erfassungsbereich auf, wobei der Fernbereich 104 und der Nahbereich 106 eine gemeinsame Erfassungsrichtung aufweisen. Der Sensor 102 ist ausgebildet, um eine Bewegung eines Nutzers 108 des Haushaltsgeräts 100 in den Bereichen 104, 106 fortlaufend zu erfassen und entsprechende Sensorsignale 112 bereitzustellen.

Das Haushaltsgerät 100 umfasst eine Vorrichtung 110, die ausgebildet ist, um die Sensorsignale 112 zu empfangen und die Bewegung des Nutzers 108 unter Verwendung der Sensorsignale 112 auszuwerten. Ergibt eine Auswertung der Sensorsignale 112, dass sich der Nutzer 108 im Fernbereich 104 dem Haushaltsgerät 100 annähert, so versetzt die Vorrichtung 110 das Haushaltsgerät 100 zunächst in einen betriebsbereiten Zustand. Ansprechend auf die Aktivierung des Haushaltsgeräts 100 führt die Vorrichtung 110 unter Verwendung der Sensorsignale 112 eine weitere Auswertung der Nutzerbewegung durch. Ergibt die weitere Auswertung, dass sich der Nutzer 108 nun auch im Nahbereich 106 dem Haushaltsgerät 100 annähert, so aktiviert die Vorrichtung 110 eine Bedienbewegungserkennungsfunktion des Haushaltsgeräts 100. Mittels der Bedienbewegungserkennungsfunktion können Gesten zur berührungslosen Steuerung des Haushaltsgeräts 100 erkannt werden. In Fig. 1 ist die Bedienbewegungserkennung als eine Funktion der Vorrichtung 110 realisiert. Alternativ kann die Bedienbewegungserkennung auch als eine Funktion einer separaten elektronischen Komponente realisiert sein.

Mittels der aktivierten Bedienbewegungserkennungsfunktion wertet die Vorrichtung 110 die Nutzerbewegung anhand der Sensorsignale 112 erneut aus. Wird dabei eine Bedienbewegung zum berührungslosen Bedienen des Haushaltsgeräts 100 erkannt, so erzeugt die Vorrichtung 110 ein der erkannten Bedienbewegung entsprechendes Steuersignal 114 zum Steuern des Haushaltsgeräts 100. Insbesondere kann die Vorrichtung 110 ausgebildet sein, um die Bedienbewegung zu erkennen, wenn die Sensorsignale 112 eine im Nahbereich 106 erfasste Nutzerbewegung repräsentieren.

Gemäß dem in Fig. 1 gezeigten Ausführungsbeispiel weist das Haushaltsgerät ein Steuergerät 116 auf, das ausgebildet ist, um das Steuersignal 114 von der Vorrichtung 110 zu empfangen und das Haushaltsgerät 100 unter Verwendung des Steuersignals 114 anzusteuern. Alternativ kann das Haushaltsgerät 100 mittels des Steuersignals 114 auch direkt durch die Vorrichtung 110 angesteuert werden.

Beispielhaft ist das Haushaltsgerät 100 in Fig. 1 mit einem weiteren Sensor 118 ausgeführt, der ausgebildet ist, um den Nutzer 108 in einem weiteren Erfassungsbereich 120 zu erfassen und analog zum Sensor 102 entsprechende weitere Sensorsignale 122 an die Vorrichtung 110 zu übertragen. Der weitere Erfassungsbereich 120 ist hier beispielhaft schräg nach unten und somit in eine von der Erfassungsrichtung der Bereiche 104, 106 abweichende Erfassungsrichtung orientiert. Die Vorrichtung 110 ist ausgebildet, um die weiteren Sensorsignale 122 auswerten. Ergibt die Auswertung der weiteren Sensorsignale 122, dass sich der Nutzer 108 im weiteren Erfassungsbereich 120 dem Haushaltsgerät 100 nähert, so stellt die Vorrichtung 110 ein weiteres Steuersignal 124 zur Ansteuerung des Haushaltsgeräts 100 bereit, das analog zum Steuersignal 114 vom Steuergerät 116 empfangen und verarbeitet wird.

Fig. 1 zeigt eine Sensoranordnung und einen Erfassungsbereich der Sensoren 102, 118 gemäß einem Ausführungsbeispiel der vorliegenden Erfindung. Dabei sind die Sensoren 102, 118, hier optische Sensoren, hinter einer Bedienblende 125 des Haushaltsgeräts 100 angeordnet. Eine Glasscheibe der Bedienblende 125 weist im Bereich der Sensoren 102, 118 eine infrarotdurchlässige Beschichtung auf. Je nach Anordnung und Auslegung der Sensoren 102, 118 können unterschiedliche Erfassungsbereiche realisiert werden. Dadurch wird eine mehrstufige Detektion des Nutzers 108 ermöglicht. Ein optisches Messsystem, das beispielsweise die Vorrichtung 110 und die Sensoren 102, 118 umfasst, ist ausgebildet, um in einer ersten Stufe eine Annäherung des Nutzers 108 im Fernbereich 104 zu erkennen und in einer zweiten Stufe Gesten im Nahbereich 106 zu erfassen. Der Zusatzbereich 120 kann beispielsweise dazu dienen, Annäherungen vor einer Gerätetür 126 zu detektieren.

Wie bereits erwähnt, wird das Haushaltsgerät 100 in Betriebsbereitschaft versetzt, sofern sich der Nutzer 108 im Fernbereich 104 auf das Haushaltsgerät 100 zubewegt. Die Betriebsbereitschaft kann je nach Ausführungsform optisch, beispielsweise durch Einschalten einer Garraumbeleuchtung, oder akustisch simuliert werden. Befindet sich das Haushaltsgerät 100 im Zustand "betriebsbereit", so kann es neben einer Standardbedienung auch durch einfache Gesten im Nahfeld eines Displays 128 bedient werden, das in Fig. 1 beispielhaft im Bereich der Bedienblende 125 angeordnet ist. Die Vorrichtung 110 kann ausgebildet sein, um einen Displayinhalt beispielsweise von einer Uhrzeitdarstellung auf einen Betriebsartenanwahlmodus umzuschalten, wenn sich der Nutzer 108 oder ein Körperteil des Nutzers 108, etwa eine Hand, dem Display 128 im Nahbereich 106 nähert. Der Nutzer 108 kann den Displayinhalt beispielsweise durch Wischgesten nach links und rechts in eine jeweilige Richtung verschieben. Der weitere Sensor 118, der hier nach schräg unten gerichtet ist, dient zur Detektion des Nutzers 108 vor der Gerätetür 126. Auf diese Weise kann der Kopf des Nutzers 108 erfasst werden, etwa wenn der Nutzer einen Blick in einen Garraum des Haushaltsgeräts 100 wirft. Die Vorrichtung 110 kann ausgebildet sein, um ansprechend auf die Detektion des Nutzers 108 vor der Gerätetür 126 eine Geräteinnenbeleuchtung einzuschalten.

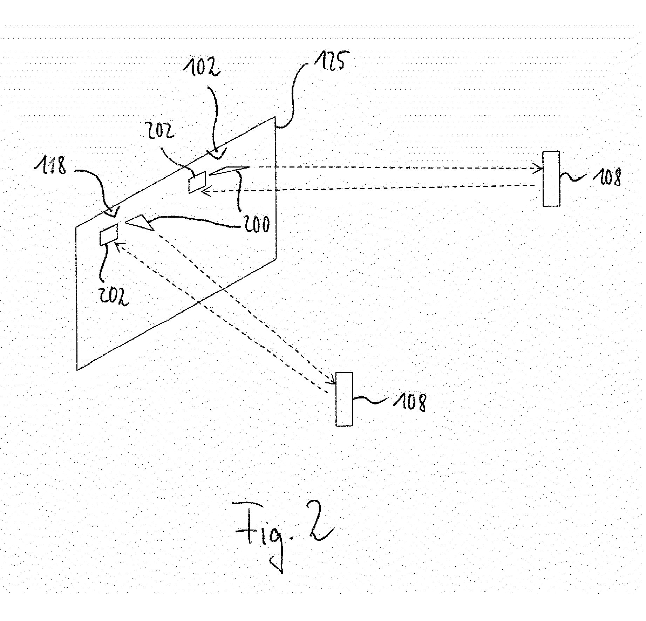

Fig. 2 zeigt eine schematische Darstellung einer Bedienblende 125 eines Haushaltsgeräts gemäß einem Ausführungsbeispiel der vorliegenden Erfindung. Bei dem Haushaltsgerät handelt es sich beispielsweise um ein Haushaltsgerät, wie es anhand von Fig. 1 beschrieben ist. Fig. 2 zeigt eine mögliche Anordnung und Ausrichtung der Sensoren 102, 118, bei der die Sensoren 102, 118 hinter der Bedienblende 125 untergebracht sind. Die Sensoren 102, 118 sind gemäß diesem Ausführungsbeispiel als optische Sensoren realisiert und weisen jeweils zumindest eine Infrarot-Sende-LED, kurz IRED, als Sender 200 und eine Fotodiode als Empfänger 200 auf. Die Bedienblende 125 ist im Bereich der Sensoren 102, 118 infrarotdurchlässig. Je nach Ausrichtung und Dimensionierung der Sender 200 können Objekte wie der Nutzer 108 in unterschiedlichen Bereichen und mit unterschiedlichen Reichweiten detektiert werden.

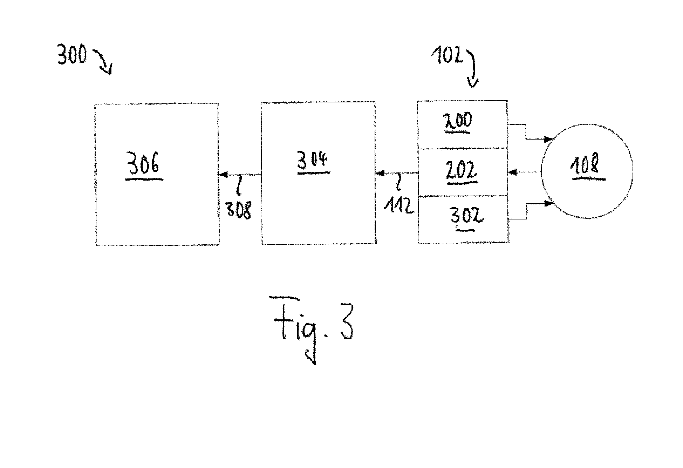

Fig. 3 zeigt ein Blockschaltbild eines Sensorsystems 300 zur Nutzererfassung gemäß einem Ausführungsbeispiel der vorliegenden Erfindung. Das Sensorsystem 300 umfasst einen optischen Sensor 102, der im Wesentlichen dem anhand von Fig. 2 beschriebenen Sensor 102 entspricht. Im Unterschied zu Fig. 2 weist der Sensor 102 neben dem Sender 200 und dem Empfänger 202 einen optionalen zusätzlichen Sender 302 auf. Die Sender 200, 302 strahlen Infrarotlicht aus. Über Reflexion bzw. Streuung an einem Objekt, etwa dem Nutzer 108, gelangt ein Teil des Infrarotlichts zurück zum Empfänger 202, etwa einer Fotodiode. Eine mit dem optischen Sensor 102 gekoppelte Aufbereitungseinheit 304 dient der Signalaufbereitung der vom optischen Sensor 102 bereitgestellten Sensorsignale 112. Ein Mikrocontroller 306 mit einem Auswertealgorithmus ist ausgebildet, um entsprechend aufbereitete Signale 308 von der Aufbereitungseinheit 304 zu empfangen und unter Verwendung der aufbereiteten Signale 308 Annäherungen, Bewegungsrichtungen oder Gesten des Nutzers 108 mit bekannten Verfahren zur optischen Abstandsmessung, beispielsweise mittels Infrarottriangulation, Laufzeitmessung oder Phasenlagemessung, zu detektieren. Durch die Detektion von Annäherung und Bewegungsrichtung ist es möglich, beispielsweise eine am Hauhaushaltsgerät vorbeilaufende Person zu ignorieren.

Durch die Verwendung zweier Sender 200, 302 ist es möglich, Wischgesten zu detektieren oder vorbeilaufende von sich annähernden Personen zu unterscheiden. Der zusätzliche Sender 302 kann angeordnet sein, um weitere Entfernungen oder andere Bereiche vor dem Haushaltsgerät abzudecken.

Die Aufbereitungseinheit 304 und der Mikrocontroller 306 können Teil der anhand der Figuren 1 und 2 beschriebenen Vorrichtung sein.

Je nach Ausführungsform kann das Sensorsystem 300 alternativ oder zusätzlich mit kapazitiven Sensoren, Ultraschallsensoren oder Radarsensoren ausgeführt sein, um die Bewegung des Nutzers 108 in ähnlicher Weise zu erfassen und auszuwerten.

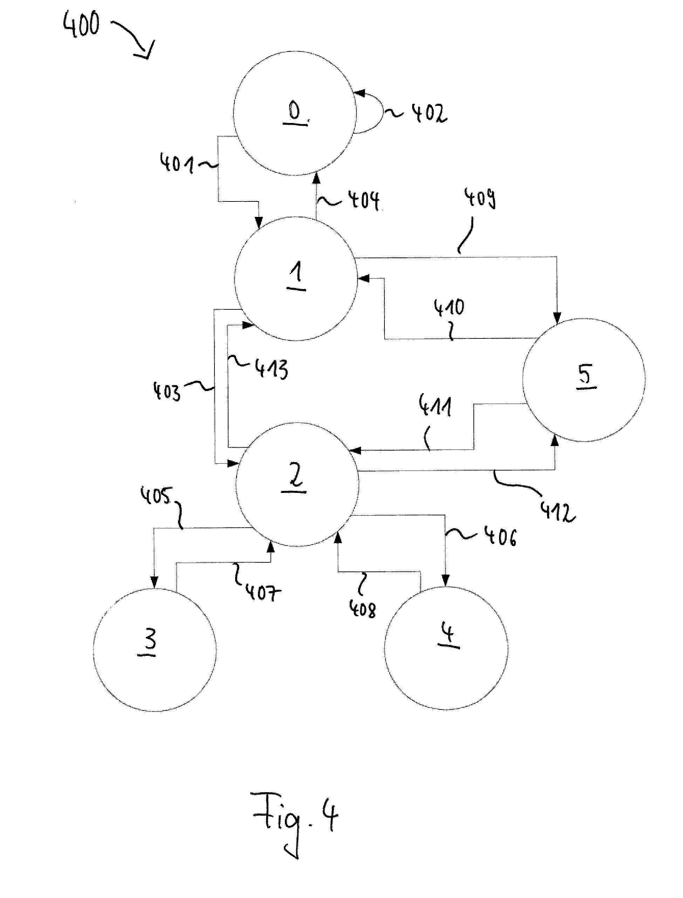

Fig. 4 zeigt ein Ablaufdiagramm eines Algorithmus 400 zur Auswertung von Sensorsignalen durch eine Vorrichtung gemäß einem Ausführungsbeispiel der vorliegenden Erfindung. Bei der Vorrichtung handelt es sich beispielsweise um eine Vorrichtung, wie sie anhand der Figuren 1 bis 3 beschrieben ist. Insbesondere kann der Algorithmus 400 von einem anhand von Fig. 3 beschriebenen Mikrocontroller der Vorrichtung ausgeführt werden.

Fig. 4 zeigt eine mögliche Ausgestaltung des Algorithmus 400. Dabei wird zunächst eine Annäherung einer Person erkannt. Erst in einem zweiten Schritt werden Gesten in einem Nahbereich bzw. Zusatzbereich detektiert.

Die Auswertung der Sensorsignale mittels des Algorithmus 400 beginnt in einem Zustand 0, auch Idle-Zustand genannt. Der Zustand 0 wird in einem Schritt 401 nur dann in Richtung eines Zustands 1 verlassen, wenn eine sich dem Haushaltsgerät nähernde Person erkannt wird. Die Annäherung kann durch einen Sensor A oder einen Sensor B des Haushaltsgeräts erkannt werden. Bei den Sensoren A, B kann es sich um die anhand der Figuren 1 bis 3 beschriebenen Sensoren handeln. Wird durch den Sensor A oder den Sensor B nichts erkannt oder eine sich quer zum Haushaltsgerät bewegende Person erkannt, so wird die Aktivierung des Zustands 1 in einem Schritt 402 unterdrückt, d. h., der Algorithmus 400 verharrt im Zustand 0, sofern das Vorbeilaufen einer Person erkannt wird.

Im Zustand 1 kann optisch oder akustisch eine Betriebsbereitschaft des Haushaltsgeräts angezeigt werden. Ab hier ist es möglich, weitere Gesten zu interpretieren. Vom Zustand 1 kann in einen Zustand 2 oder einen Zustand 5 gewechselt werden, sofern bestimmte Abstandsschwellen unterschritten werden. Beispielsweise wechselt der Zustand 1 in einem Schritt 403 in den Zustand 2, wenn der Sensor A eine Annäherung der Person, insbesondere eines Körperteils der Person wie etwa einer Hand, in einem Abstand von weniger als 20 cm oder weniger als 25 cm erfasst. Wird hingegen von beiden Sensoren A, B im Zustand 1 nichts erkannt und ist eine vorgegebene Zeit T abgelaufen, während der keine Person mehr detektiert wurde, so wechselt der Zustand 1 in einem Schritt 404 zurück in den Zustand 0.

Beispielsweise wird im Schritt 403 eine Annäherungsgeste vor einem Gerätedisplay des Haushaltsgeräts erkannt. Dadurch wird der Zustand 2 aktiviert. Der Abstand der Person, hier beispielsweise der Hand, zum Sensor A ist dabei kleiner als die festgelegte Abstandsschwelle von beispielsweise 20 cm oder 25 cm. Als Aktion kann beispielsweise das Gerätedisplay von einer Zeitdarstellung in eine Betriebsartenanwahldarstellung wechseln.

Wird im Zustand 2 mittels des Sensors A eine Wischgeste nach links erkannt, so wechselt der Zustand 2 in einem Schritt 405 für eine vorgegebene Zeitspanne X im Millisekundenbereich in einen Zustand 3. Erkennt der Sensor A im Zustand 2 eine Wischgeste nach rechts, so wird in einem Schritt 406 für die Zeitspanne X ein Zustand 4 aktiviert. Nach Ablauf der Zeitspanne X wechselt der Zustand 3 in einem Schritt 407 bzw. der Zustand 4 in einem Schritt 408 zurück in den Zustand 2. Je nach erkannter Wischgeste wird beispielsweise der Displayinhalt nach links oder rechts gescrollt.

Der Zustand 5 eignet sich insbesondere als Option für Gargeräte. Ein eigener Sender in Form des Sensors B ist so ausgerichtet, dass ein Körperteil der Person, hier beispielsweise ein Kopf, in einem Abstand von ca. 50 cm vor einer Garraumtür eines Backofens oder Dampfgarers erkannt wird. Als Aktion kann im Zustand 5 beispielsweise eine Garraumbeleuchtung eingeschaltet werden.

Befindet sich das Haushaltsgerät im betriebsbereiten Zustand 1 und erkennt der Sensor B den Kopf vor der Garraumtür, so wechselt der Zustand 1 in einem Schritt 409 in den Zustand 5.

Erkennt der Sensor B im Zustand 5, dass der Kopf einen Abstand von mehr als 50 cm zuzüglich einer Hysterese aufweist, so wechselt der Zustand 5 in einem Schritt 410 zurück in den Zustand 1.

Erkennt der Sensor A im Zustand 5, dass der Kopf einen Abstand von weniger als 20 cm aufweist, so wird in einem Schritt 411 der Zustand 2 aktiviert.

Erkennt im Zustand 2 der Sensor A, dass der Abstand der Hand oder des Kopfes größer als 20 cm zuzüglich einer Hysterese ist, und der Sensor B, dass der Abstand kleiner als 50 cm ist, so wechselt der Zustand 2 in einem Schritt 412 wiederum in den Zustand 5.

Erkennt hingegen im Zustand 2 der Sensor A, dass der Abstand größer als 20 cm zuzüglich einer Hysterese ist, und der Sensor B, dass der Abstand größer als 50 cm ist, so wechselt der Zustand 2 in einem Schritt 413 zurück in den Zustand 1.

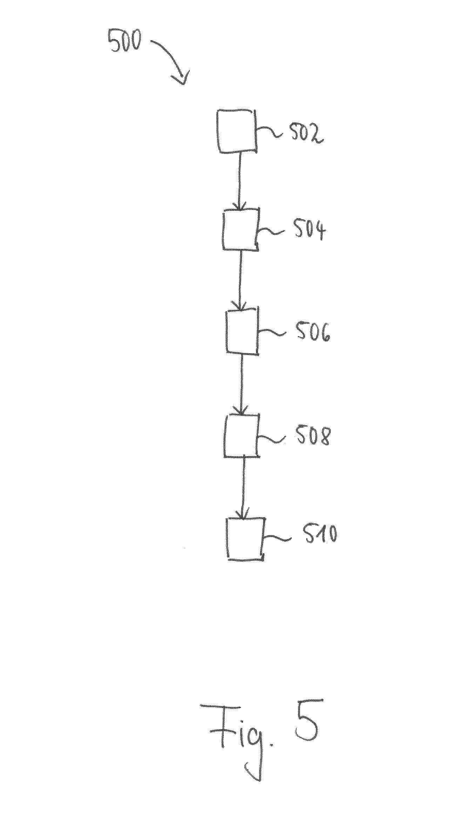

Fig. 5 zeigt ein Ablaufdiagramm eines Verfahrens 500 zum Bedienen eines Haushaltsgeräts, das zumindest einen Sensor zum Erfassen eines Nutzers des Haushaltsgeräts aufweist, gemäß einem Ausführungsbeispiel der vorliegenden Erfindung. Das Verfahren 500 kann beispielsweise von Einrichtungen einer Vorrichtung, wie sie anhand der Figuren 1 bis 4 beschrieben ist, durchgeführt werden. In einem Schritt 502 wird eine durch den Sensor erfasste Bewegung des Nutzers ausgewertet. Die Erfassung der Bewegung kann dabei Teil des Verfahrens sein. Alternativ kann eine Information über die von dem Sensor erfasste Bewegung über eine Schnittstelle eingelesen werden. Wird die erfasste Bewegung als eine in einem vorgegebenen ersten Erfassungsbereich erfasste Annäherungsbewegung relativ zum Haushaltsgerät erkannt, so wird in einem Schritt 504 ein Einschaltsignal bereitgestellt, das dazu dient, das Haushaltsgerät in einen betriebsbereiten Zustand zu versetzen. Wird hingegen im Schritt 502 erkannt, dass es sich bei der Bewegung um eine in einem vorgegebenen zweiten Erfassungsbereich erfasste Annäherungsbewegung relativ zum Haushaltsgerät handelt, so wird in einem Schritt 506 unter Verwendung des Einschaltsignals ein Aktivierungssignal ausgegeben, das der Aktivierung einer Bedienbewegungserkennungsfunktion des Haushaltsgeräts dient. Der Schritt 506 des Ausgebens wird somit nur dann durchgeführt, wenn sich das Haushaltsgerät im betriebsbereiten Zustand befindet. Beispielsweise kann der Schritt 502 des Auswertens während des Schritts 504 des Bereitstellens fortlaufend durchgeführt werden oder ansprechend auf das Bereitstellen des Einschaltsignals erneut durchgeführt werden, um die Bewegung des Nutzers hinsichtlich einer Annäherung im zweiten Erfassungsbereich auszuwerten.

Gemäß einem Ausführungsbeispiel wird nachfolgend auf den Schritt 506 ein Schritt 508 ausgeführt, in dem eine durch den Sensor erfasste weitere Bewegung des Nutzes mittels der Bedienbewegungserkennungsfunktion unter Verwendung des Aktivierungssignals analysiert wird. Ergibt die Analyse, dass es sich bei der weiteren Bewegung um eine Bedienbewegung zur berührungslosen Bedienung des Haushaltsgeräts handelt, so wird in einem Schritt 510 ein Steuersignal zum Steuern des Haushaltsgeräts generiert.

Um Fehlerkennungen zu vermeiden, wird beispielsweise das Einschaltsignal im Schritt 504 oder das Aktivierungssignal im Schritt 506 oder das Steuersignal im Schritt 510 nur dann erzeugt, wenn, im Fall des Einschalt- und Aktivierungssignals, die Bewegung im Schritt 502 als eine zumindest eine vorgegebene Annäherungsdauer dauernde Annäherungsbewegung oder, im Fall des Steuersignals, die weitere Bewegung im Schritt 508 als eine zumindest eine vorgegebene Bediendauer dauernde Bedienbewegung erkannt wird.

Gemäß einem weiteren Ausführungsbeispiel wird im Schritt 506 das Aktivierungssignal bzw. im Schritt 510 das Steuersignal unter der zusätzlichen oder alternativen Bedingung erzeugt, dass im Schritt 502 die Bewegung als eine innerhalb des zweiten Erfassungsbereichs erfasste Annäherungsbewegung bzw. im Schritt 508 die weitere Bewegung als eine innerhalb des zweiten Erfassungsbereichs erfasste Bedienbewegung erkannt wird. Insbesondere kann der zweite Erfassungsbereich dabei einen Nahbereich mit einer Erfassungsreichweite von beispielsweise bis zu 50 cm oder bis zu 80 cm ausgehend vom Haushaltsgerät repräsentieren.

Das Verfahren 500 zur sensorunterstützten, berührungslosen Bedienung eines Haushaltsgeräts beruht prinzipiell darauf, aus Abstandsinformationen über einen Abstand eines Objekts zu einem Sensor Annäherungen und aus einer Lichtverteilung bei Nutzung mehrerer Sensoren Wischgesten zu erkennen. Nach Identifikation einer Geste wird eine entsprechende Aktion im Haushaltsgerät ausgeführt.

Je nach Anordnung und Auslegung der Sensoren kann ein Erfassungsbereich des Haushaltsgeräts in mehrere Gebiete unterteilt sein, wie in Fig. 1 gezeigt. Die Einteilung in unterschiedliche Erfassungsbereiche ermöglicht eine mehrstufige Detektion von Gesten, wie weiter oben genauer beschrieben.

Nachfolgend werden verschiedene Bedienszenarien, d. h. verschiedene Gesten und dadurch auslösbare Aktionen, am Beispiel von Einbaugeräten wie Backofen, Dampfgarer und Kaffeevollautomat vorgestellt. Je nach Ausführungsform kann die beschriebene Sensierung der Gesten mit ähnlichen oder abgewandelten Aktionen auch in anderen Haushaltsgeräten, etwa in Waschautomaten, Wäschetrocknern oder Geschirrspülern, angewandt werden.

In einem ersten Szenario erkennt das Haushaltsgerät, hier ein Backofen, Dampfgarer oder Kaffeevollautomat, mithilfe eines Sensors in einer Bedienblende, dass eine Person im Fernbereich am Gerät vorbeiläuft. Das Haushaltsgerät ignoriert die Person und bleibt in seinem aktuellen Zustand.

In einem zweiten Szenario erkennt das Haushaltsgerät mithilfe des Sensors in der Bedienblende, dass sich die Person dem Gerät nähert. Der Abstand der Person liegt im Fernbereich des Sensors, insbesondere in einem Bereich zwischen 1 m und 2 m vor dem Gerät. Zur robusten Erkennung einer Annäherung sollte sich die Person für eine Dauer von mindestens 800 ms im Fernbereich dem Gerät annähern. Das Haushaltsgerät zeigt optisch oder akustisch eine Betriebsbereitschaft an. Die Displayanzeige wechselt von Zeitdarstellung auf Betriebsartenmodus. Die Gerätetöne werden leiser.

In einem dritten Szenario erkennt das Haushaltsgerät nachfolgend auf die Erkennung der Annäherung mithilfe des Sensors in der Bedienblende, dass sich eine Person an das Gerät im Nahbereich anlehnt. Das Haushaltsgerät ignoriert die Gestenerkennung im Nahbereich so lange, bis sich die Person nicht mehr an das Gerät anlehnt.

In einem vierten Szenario erkennt das Haushaltsgerät mithilfe des Sensors in der Bedienblende eine Annäherung einer Hand. Der Abstand der Hand liegt im Nahbereich des Sensors. Dabei sollte die Annäherung der Hand für eine Dauer von 100 ms bis 500 ms, insbesondere 200 ms, in einem Erfassungsbereich zwischen 25 cm und 5 cm vor dem Gerät erkannt werden. Es schaltet sich das Display des Haushaltsgeräts ein. Die Displayanzeige wechselt von Zeitdarstellung auf Betriebsartenmodus. Die Gerätetöne werden leiser.

In einem fünften Szenario erkennt das Haushaltsgerät, dass sich die Hand aus dem Nahbereich des Sensors entfernt. Es wird keine Aktion ausgeführt. Hat der Benutzer eine Betriebsart angewählt, so bleibt die Displayanzeige im angewählten Programm. Hat der Benutzer nichts angewählt, so bleibt die Displaydarstellung im Betriebsartenmodus.

In einem sechsten Szenario erkennt ein Backofen oder Dampfgarer mithilfe des weiteren Sensors in der Bedienblende eine Annäherung einer Hand. Der Abstand der Hand liegt im Nahbereich des Sensors. Die Hand sollte für eine Dauer von 100 ms bis 500 ms, insbesondere 200 ms, in einem Erfassungsbereich zwischen 30 cm und 15 cm vor dem Gerät erkannt werden. Es öffnet sich die Garraumtür des Backofens oder Dampfgarers.

In einem weiteren Szenario erkennt das Haushaltsgerät mithilfe des Sensors in der Bedienblende eine Wischgeste einer Hand. Der Abstand der Hand liegt im Nahbereich des Sensors. Das Displaybild scrollt je nach Wischrichtung nach links oder rechts.

Im Fall eines Backofens oder Dampfgarers ist es denkbar, dass mithilfe des Sensors in der Bedienblende erkannt wird, ob sich ein Objekt, beispielsweise ein Kopf einer Person, einer Garraumtür nähert. Dabei liegt der Abstand des Objekts im Zusatzbereich des Sensors. Ein solcher weiterer Erfassungsbereich des Sensors ist beispielsweise in Fig. 1 gezeigt. Als Aktion wird die Garraumbeleuchtung eingeschaltet.

Mithilfe des Sensors in der Bedienblende kann ferner erkannt werden, ob sich eine Person aus dem Fernbereich des Sensors entfernt. Dabei können beispielsweise die Gerätetöne entsprechend lauter gestellt werden. Ist keine Betriebsart angewählt, so wechselt die Displayanzeige auf Zeitdarstellung. Optional wird eine Hintergrundbeleuchtung ausgeschaltet, um Energie zu sparen. Ist eine Betriebsart angewählt, so zeigt die Displayanzeige beispielsweise eine Restzeit an.

Die je nach erkannter Geste ausgeführten Aktionen oder dargestellten Anzeigen sind lediglich beispielhaft beschrieben und können beliebig ausgewählt oder abgeändert werden.

Beispielsweise kann eine Dunstabzugshaube mit einem Sensor ausgeführt sein, um zu erkennen, ob ein Kochgefäß, etwa ein Topf oder eine Pfanne, auf ein Kochfeld gestellt wird. Bei Erkennung des Kochgefäßes kann die Bedienung des Kochfelds eingeschaltet werden. Zusätzlich kann eine Beleuchtung der Dunstabzugshaube eingeschaltet werden.

Die Dunstabzugshaube kann ausgebildet sein, um mithilfe des Sensors berührungslose Wischgesten im Nahbereich des Sensors zu sensieren. Je nach erkannter Wischgeste kann eine Luftleistung der Dunstabzugshaube reguliert werden.

Werden stattdessen Annäherungsgesten im Nahbereich sensiert, so kann die Beleuchtung entsprechend der Geste heller oder dunkler gedimmt werden.

Ein Kühlgerät wie etwa ein Kühl- oder Gefrierschrank kann ausgebildet sein, um ansprechend auf die Erkennung einer sich nähernden Person im Fernbereich eine Öffnungsgeste im Nahbereich zu erkennen. Ansprechend auf die Erkennung der Öffnungsgeste kann beispielsweise eine Kühlgerätetür motorgetrieben aufgestoßen werden.

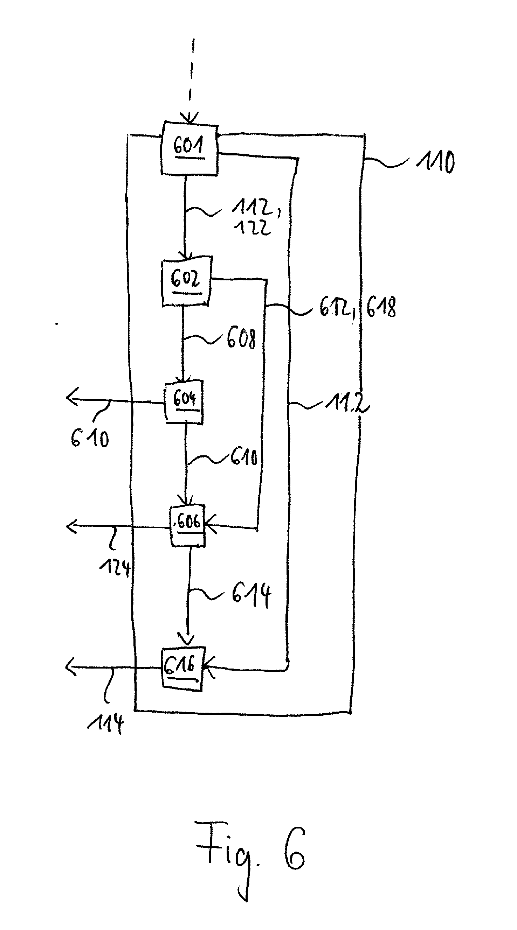

Fig. 6 zeigt ein Blockschaltbild einer Vorrichtung 110 zum Bedienen eines Haushaltsgeräts gemäß einem Ausführungsbeispiel der vorliegenden Erfindung. Bei der Vorrichtung 110 handelt es sich beispielsweise um eine anhand der Figuren 1 bis 5 beschriebene Vorrichtung.

Die Vorrichtung 110 umfasst eine Auswerteeinheit 602, eine Bereitstellungseinheit 604 sowie eine Ausgabeeinheit 606. Gemäß diesem Ausführungsbeispiel ist die Auswerteeinheit 602 ausgebildet, um über eine Schnittstelle 601 zu dem Sensor die Sensorsignale 112 zu empfangen und unter Verwendung der Sensorsignale 112 die durch den Sensor erfasste Bewegung des Nutzers auszuwerten. Weiterhin ist die Auswerteeinheit 602 ausgebildet, um ein erstes Erkennungssignal 608 an die Bereitstellungseinheit 604 zu senden, sofern die Auswertung ergibt, dass es sich bei der Bewegung um eine im ersten Erfassungsbereich erfasste Annäherungsbewegung des Nutzers relativ zum Haushaltsgerät handelt.

Die Bereitstellungseinheit 604 ist gemäß Fig. 6 ausgebildet, um unter Verwendung des ersten Erkennungssignals 608 ein Einschaltsignal 610 bereitzustellen und an die Ausgabeeinheit 606 sowie an ein Steuergerät des Haushaltsgeräts zu senden, etwa an das anhand von Fig. 1 beschriebene Steuergerät. Dabei ist das Steuergerät ausgebildet, um das Haushaltsgerät unter Verwendung des Einschaltsignals 610 in einen betriebsbereiten Zustand zu versetzen.

Erkennt die Auswerteeinheit 602 unter Verwendung der Sensorsignale 112 eine Annäherungsbewegung im zweiten Erfassungsbereich des Sensors, so erzeugt sie ein zweites Erkennungssignal 612 und überträgt dieses an die Ausgabeeinheit 606.

Die Ausgabeeinheit 606 ist ausgebildet, um unter Verwendung des zweiten Erkennungssignals 612 und des Einschaltsignals 610 ein Aktivierungssignal 614 auszugeben.

Gemäß diesem Ausführungsbeispiel weist die Vorrichtung 110 zusätzlich eine Analyseeinheit 616 auf, die ausgebildet ist, um von der Ausgabeeinheit 606 das Aktivierungssignal 614 und von der Schnittstelle 601 die Sensorsignale 112 empfangen und unter Verwendung der Signale 112, 614 die Bedienbewegungserkennung durchzuführen. Erkennt die Analyseeinheit 616 dabei eine durch den Sensor erfasste weitere Bewegung des Nutzers als eine Bedienbewegung, so generiert sie das Steuersignal 114 zur Steuerung des Haushaltsgeräts, das beispielsweise von dem Steuergerät empfangen und verarbeitet werden kann.

Zusätzlich oder alternativ kann das Aktivierungssignal 614 von dem Steuergerät empfangen und verwendet werden. Das Steuergerät kann mit einer Bedienbewegungserkennungsfunktion realisiert sein, die unter Verwendung des Aktivierungssignals 614 aktiviert werden kann.

Beispielsweise kann die Auswerteeinheit 602 ausgebildet sein, um über die Schnittstelle 601 weitere Sensorsignale 122 von einem weiteren Sensor des Haushaltsgeräts zu empfangen und unter Verwendung der weiteren Sensorsignale 122 eine in einem weiteren Erfassungsbereich des Sensors erfasste Annäherungsbewegung des Nutzers zu erkennen. Dabei erzeugt die Auswerteeinheit 602 ein entsprechendes weiteres Erkennungssignal 618. Die Ausgabeeinheit 606 ist ausgebildet, um das weitere Erkennungssignal 618 zu empfangen und unter Verwendung des weiteren Erkennungssignals 618 das weitere Steuersignal 124 zu erzeugen.

## Patentansprüche

1. Verfahren (500) zum Bedienen eines Haushaltsgeräts (100), das zumindest einen Sensor (102, 118) zum Erfassen eines Nutzers (108) des Haushaltsgeräts (100) aufweist, wobei das Verfahren (500) folgende Schritte umfasst:
Auswerten (502) einer durch den Sensor (102, 118) erfassten Bewegung des Nutzers (108);
Bereitstellen (504) eines Einschaltsignals (610) zum Versetzen des Haushaltsgeräts (100) in einen betriebsbereiten Zustand, wenn im Schritt des Auswertens (502) die Bewegung als eine in einem vorgegebenen ersten Erfassungsbereich (104) erfasste Annäherungsbewegung relativ zum Haushaltsgerät (100) erkannt wird; und
Ausgeben (506) eines Aktivierungssignals (614) zum Aktivieren einer Bedienbewegungserkennungsfunktion des Haushaltsgeräts (100) unter Verwendung des Einschaltsignals (610), wenn im Schritt des Auswertens (502) die Bewegung als eine in einem vorgegebenen zweiten Erfassungsbereich (106) erfasste Annäherungsbewegung relativ zum Haushaltsgerät (100) erkannt wird.

2. Verfahren (500) gemäß Anspruch 1, bei dem der erste Erfassungsbereich (104) weiter von dem Haushaltsgerät (100) entfernt ist als der zweite Erfassungsbereich (106).

3. Verfahren (500) gemäß einem der vorangegangenen Ansprüche, bei dem im Schritt des Ausgebens (506) das Aktivierungssignal (614) ausgegeben wird, wenn im Schritt des Auswertens (502) die Bewegung als eine in dem zweiten Erfassungsbereich (106) erfasste Annäherungsbewegung eines Körperteils des Nutzers (108) relativ zum Haushaltsgerät (100) erkannt wird.

4. Verfahren (500) gemäß einem der vorangegangenen Ansprüche, bei dem im Schritt des Bereitstellens (504) das Einschaltsignal (610) bereitgestellt wird und/oder im Schritt des Ausgebens (506) das Aktivierungssignal (614) ausgegeben wird, wenn im Schritt des Auswertens (502) die Bewegung als eine für eine vorgegebene Annäherungsdauer andauernde Annäherungsbewegung relativ zum Haushaltsgerät (100) erkannt wird.

5. Verfahren (500) gemäß einem der vorangegangenen Ansprüche, mit einem Schritt des Erzeugens eines Änderungssignals zum Ändern einer Anzeige und/oder einer Signaltonlautstärke des Haushaltsgeräts (100) unter Verwendung des Einschaltschaltsignals (610) und/oder des Aktivierungssignals (614).

6. Verfahren (500) gemäß einem der vorangegangenen Ansprüche, mit einem Schritt des Analysierens (508) einer durch den Sensor (102, 118) erfassten weiteren Bewegung des Nutzers (108) mittels der Bedienbewegungserkennungsfunktion unter Verwendung des Aktivierungssignals (614), wobei in einem Schritt des Generierens (510) ein Steuersignal (114) zum Steuern des Haushaltsgeräts (100) generiert wird, wenn im Schritt des Analysierens (508) die weitere Bewegung als eine Bedienbewegung zum berührungslosen Bedienen des Haushaltsgeräts (100) erkannt wird.

7. Verfahren (500) gemäß Anspruch 6, bei dem im Schritt des Generierens (510) das Steuersignal (114) generiert wird, wenn im Schritt des Analysierens (508) die weitere Bewegung als eine in dem zweiten Erfassungsbereich (106) erfasste Bedienbewegung erkannt wird.

8. Verfahren (500) gemäß Anspruch 6 oder 7, bei dem im Schritt des Generierens (510) das Steuersignal (114) generiert wird, wenn im Schritt des Analysierens (508) die weitere Bewegung als eine für eine vorgegebene Bediendauer andauernde Bedienbewegung erkannt wird.

9. Verfahren (500) gemäß einem der vorangegangenen Ansprüche, bei dem im Schritt des Ausgebens (506) unter Verwendung des Einschaltsignals (610) zumindest ein weiteres Steuersignal (124) zum Steuern des Haushaltsgeräts (100) ausgegeben wird, wenn im Schritt des Auswertens (502) die Bewegung als eine in zumindest einem vorgegebenen weiteren Erfassungsbereich (120) erfasste Annäherungsbewegung relativ zum Haushaltsgerät (100) erkannt wird.

10. Verfahren (500) gemäß Anspruch 9, bei dem der weitere Erfassungsbereich (120) in eine andere Richtung orientiert ist als der erste Erfassungsbereich (104) und/oder der zweite Erfassungsbereich (106).

11. Verfahren (500) gemäß einem der vorangegangenen Ansprüche, bei dem im Schritt des Auswertens (502) zumindest eine durch den Sensor (102, 118) erfasste zusätzliche Bewegung des Nutzers (108) ausgewertet wird, wobei in einem Schritt des Aussendens zumindest ein zusätzliches Steuersignal zum Steuern des Haushaltsgeräts (100) ausgesendet wird, wenn im Schritt des Auswertens (502) die zusätzliche Bewegung als eine Entfernungsbewegung relativ zum Haushaltsgerät (100) erkannt wird.

12. Vorrichtung (110), die ausgebildet ist, um alle Schritte eines Verfahrens (500) gemäß einem der vorangegangenen Ansprüche durchzuführen.

13. Haushaltsgerät (100) mit folgenden Merkmalen:
einer Vorrichtung (110) gemäß Anspruch 12; und
zumindest einem Sensor (102, 118) zum Erfassen eines Nutzers (108) des Haushaltsgeräts (100).

14. Computerprogramm, das dazu eingerichtet ist, alle Schritte eines Verfahrens (500) gemäß einem der Ansprüche 1 bis 11 durchzuführen.

15. Maschinenlesbares Speichermedium mit einem darauf gespeicherten Computerprogramm nach Anspruch 14.
